# EUROPÄISCHE PATENTANMELDUNG

(11) **EP 3 434 937 A1**
(43) Veröffentlichungstag der Anmeldung: **30.01.2019**
(21) Anmeldenummer: 18181817.0
(22) Anmeldetag: 05.07.2018
(51) Int. Cl.: F16H 59/04, F16D 48/06, G06F 3/01

(54) **VERFAHREN ZUM BETREIBEN EINES MIT EINEM HANDSCHALTGETRIEBE UND EINER AUTOMATISCHEN KUPPLUNG AUSGEBILDETEN KRAFTFAHRZEUGS UND KRAFTFAHRZEUG**

(30) Priorität: 27.07.2017 DE 102017213008
(71) Anmelder: Continental Automotive GmbH, 30165 Hannover (DE)
(72) Erfinder: Nuß, Alexander, 93090 Bach a.d. Donau (DE); Graf, Friedrich, 93161 Sinzing (DE); Opel, Martin, 93059 Regensburg (DE)

(57) **Zusammenfassung**

Die Erfindung betrifft ein Verfahren zum Betreiben eines mit einem Handschaltgetriebe (4) und einer automatischen Kupplung (3) ausgebildeten Kraftfahrzeugs (1), bei welchem folgende Schritte durchgeführt werden:
- Aufnehmen zumindest eines Bildes (12) einer Schalthand (17) eines Fahrers (14) des Kraftfahrzeugs (1);
- Bestimmen zumindest eines charakteristischen Merkmals (18) der abgebildeten Schalthand (17) im Bild (12);
- Vergleichen des Merkmals (18) mit zumindest einem Referenzmerkmal;
- Erkennen einer Schaltabsicht (19) des Fahrers (14) anhand des Vergleichs; und
- Zumindest teilweises Öffnen der Kupplung (3), falls die Schaltabsicht (19) erkannt wird.

## Beschreibung

Die Erfindung betrifft ein Verfahren zum Betreiben eines mit einem Handschaltgetriebe und einer automatischen Kupplung ausgebildeten Kraftfahrzeugs. Des Weiteren betrifft die Erfindung auch ein Kraftfahrzeug mit einem Handschaltgetriebe und einer automatischen Kupplung, welches dazu ausgebildet ist ein dementsprechendes Verfahren durchzuführen.

Kraftfahrzeuge mit einem Handschaltgetriebe und einer automatischen Kupplung sind bekannt. Das Handschaltgetriebe ist dabei als manuelles Schaltgetriebe ausgebildet, so dass ein Fahrer einen Handschalthebel bzw. einen Wählhebel des Kraftfahrzeugs zum Ändern eines Gangs mit der Hand betätigen muss. Die automatische Kupplung hingegen ist automatisiert und muss zum Wechseln des Gangs vom Fahrer nicht betätigt werden, sondern öffnet und schließt sich automatisch. Das Kraftfahrzeug kann deswegen auch lediglich optional mit einem Kupplungspedal ausgebildet sein.

Bisher ist es bekannt, dass durch einen Dehnungsmessstreifen am Handschalthebel erkannt wird, wann der Fahrer den Handschalthebel berührt und davon wiederum eine Schaltabsicht des Fahrers abgeleitet wird. Nach dem Erkennen der Schaltabsicht wird dann eine Kupplung des Kraftfahrzeugs geöffnet, damit der Fahrer manuell schalten kann.

Nachteilig ist, dass zwischen dem Erkennen der Schaltabsicht und dem Bewegen des Handschalthebels durch den Fahrer oftmals zu wenig Zeit verbleibt um die Kupplung zu öffnen.

Es ist Aufgabe der vorliegenden Erfindung, ein Verfahren und ein Kraftfahrzeug zu schaffen, bei welchem bzw. mit welchem eine Schaltabsicht des Fahrers eines Kraftfahrzeugs mit einem Handschaltgetriebe und einer automatischen Kupplung früher erkannt werden kann.

Diese Aufgabe wird durch ein Verfahren und ein Kraftfahrzeug gemäß den unabhängigen Ansprüchen gelöst.

Bei einem erfindungsgemäßen Verfahren wird ein Kraftfahrzeug mit einem Handschaltgetriebe und einer automatischen Kupplung betrieben. Es werden folgende Schritte durchgeführt:
- Insbesondere Bestimmen einer Hand eines Fahrers des Kraftfahrzeugs als Schalthand;
- Aufnehmen zumindest eines Bilds der Schalthand;
- Bestimmen zumindest eines charakteristischen Merkmals der abgebildeten Schalthand im Bild;
- Vergleichen des Merkmals mit zumindest einem Referenzmerkmal;
- Erkennen einer Schaltabsicht des Fahrers anhand des Vergleichs, insbesondere wird eine Annäherung der Schalthand an einen Handschalthebel des Kraftfahrzeugs erkannt; und
- Zumindest teilweises Öffnen der Kupplung, und insbesondere dadurch zumindest teilweises Unterbrechen eines Kraftflusses zwischen einer Traktionseinheit des Kraftfahrzeugs und dem Handschaltgetriebe, falls die Schaltabsicht erkannt wird.

Der Erfindung liegt die Kenntnis zu Grunde, dass anhand eines von der Schalthand des Fahrers aufgenommenen Bilds schneller - insbesondere vor Berühren eines Handschalthebels - festgestellt werden kann, ob der Fahrer eine Schaltabsicht verfolgt oder nicht.

Das Bestimmen der Schalthand kann entweder dadurch geschehen, dass vorbekannt ist, ob das Kraftfahrzeug rechtsgesteuert oder linksgesteuert ausgebildet ist und somit auch die Schalthand bereits festgelegt ist. Oder aber die Schalthand kann auch anhand des aufgenommenen Bilds bestimmt werden. So kann das Bild beispielsweise auch beide Hände des Fahrers aufweisen.

Das Bild wird insbesondere mit einer Kamera des Kraftfahrzeugs aufgenommen, welche beispielsweise im Innenraum des Kraftfahrzeugs angeordnet ist und zumindest mit einem Teil des Erfassungsbereichs die Schalthand erfasst. Insbesondere werden von der Schalthand mehrere Bilder also eine Bildsequenz aufgenommen. Durch die Aufnahme der Bildsequenz von der Schalthand kann die Schaltabsicht zuverlässiger als mit nur einem Einzelbild erkannt werden.

Das Bild kann aber auch mit einem anderen optischen Sensor aufgenommen werden. Beispielsweise mit einem Laserscanner. Das Bild liegt dann beispielsweise als Punktwolke vor.

In dem Bild wird das charakteristische Merkmal bestimmt. Das charakteristische Merkmal beschreibt die Schalthand bzw. die vorliegende Form der Schalthand. Vorzugsweise werden mehrere charakteristische Merkmale der Schalthand bestimmt. Das charakteristische Merkmal kann beispielsweise als Intensitätswert oder aber Haar-Merkmal oder HOG-Merkmal (Histogram of Oriented Gradients) ausgebildet sein. Das charakteristische Merkmal kann für den Bereich von einem Bildpunkt des Bildes oder aber für den Bereich von mehreren Bildpunkten des Bilds bestimmt werden. Weiterhin kann das charakteristische Merkmal beispielsweise für jeden Farbkanal einzeln bestimmt werden oder aber für alle Farbkanäle zusammen oder aber lediglich für den Grauwertkanal des Bilds. Das Bild kann als Grauwertbild, Farbbild oder auch Wärmebild vorliegen. Es können auch mehrere Bilder von unterschiedlichen Kameras aufgenommen werden, so dass beispielsweise ein Tiefenbild von der Hand erzeugt werden kann. Durch das Tiefenbild wird Information über die Bildtiefe also eine dritte Dimension zu den zwei Bilddimensionen bereitgestellt. Das Bild kann auch durch eine Infrarotbildkamera aufgenommen werden und so auch bei schlechten Lichtverhältnissen, beispielsweise in der Nacht, derart bereitgestellt werden, dass das charakteristische Merkmal bestimmt werden kann.

Der Vergleich des Merkmals mit dem Referenzmerkmal kann beispielsweise durch einen Klassifikator durchgeführt werden. Der Klassifikator kann beispielsweise mit einer Methode des maschinellen Lernens erzeugt werden. Genutzt werden kann beispielsweise das Verfahren einer Supportvektormaschine (SVM) oder es kann auch ein AdaBoost-Verfahren genutzt werden.

Bei dem Vergleich wird das Merkmal dann insbesondere mit den Referenzmerkmalen verglichen, welche charakteristisch für das Vorhandensein der Schaltabsicht sind. Die Referenzmerkmale sind dann sog. positive Referenzmerkmale. Es können aber auch negative Referenzmerkmale genutzt werden, welche die Schalthand zeigen, falls keine Schaltabsicht vorliegt. Positive und negative Merkmale können auch gemeinsam genutzt werden.

Als Ergebnis des Vergleichs kann dann beispielsweise ein Zuverlässigkeitswert ausgegeben werden, welcher vorzugsweise normiert zwischen 0 und 1 liegt. Je größer dieser Zuverlässigkeitswert ist, desto wahrscheinlicher liegt die Schaltabsicht vor. Es kann aber auch beispielsweise ein Schwellwert bestimmt werden, welcher bei 0,8 liegt und dann von einer Schaltabsicht ausgegangen wird, falls der Zuverlässigkeitswert des Vergleichs oberhalb des Schwellwerts liegt, also beispielsweise 0,9 beträgt.

Wird die Schaltabsicht des Fahrers anhand des Vergleichs erkannt, so wird die Kupplung geöffnet. Wird keine Schaltabsicht des Fahrers erkannt, so bleibt die Kupplung geschlossen.

Durch das Öffnen der Kupplung wird der Kraftfluss zwischen der Traktionseinheit des Kraftfahrzeugs und dem Handschaltgetriebe unterbrochen. Der Fahrer kann nun manuell schalten bzw. einen anderen Gang einlegen.

Die Schaltabsicht wird also insbesondere mit Mitteln der Bildverarbeitung und der Mustererkennung erkannt.

Durch den Vergleich kann die Schaltabsicht insbesondere auch derart erkannt werden, dass erkannt wird, ob sich die Schalthand in einem virtuellen Raum um den Schalthebel herum befindet oder in diesen eindringt oder diesen verlässt.

Vorzugsweise wird das Referenzmerkmal personenbezogen ausgewählt. So wird beispielsweise erkannt, welche Person das Kraftfahrzeug steuert und dementsprechend werden für den Vergleich Referenzmerkmale genutzt, welche das individuelle Schaltverhalten dieser Person beschreiben. Das Referenzmerkmal kann dann beispielsweise auch fortlaufend während dem Betrieb des Kraftfahrzeugs, beispielsweise durch ein sogenanntes Online-Lernen, angepasst werden.

Vorzugsweise ist es vorgesehen, dass die Schaltabsicht abhängig von einer Formung, insbesondere einer ein Greifen vorbereitende Formung, der Schalthand erkannt wird. So kann abhängig von der Formung der Schalthand erkannt werden, ob die Schaltabsicht vorliegt oder nicht. Ist die Schalthand beispielsweise so geformt als würde sie einen Gegenstand greifen wollen, so ist dies ein Hinweis darauf, dass die Schaltabsicht vorliegen könnte, da der Fahrer nun mit der Schalthand vielleicht den Handschalthebel greift.

Es kann aber auch eine Formung der Schalthand berücksichtigt werden, welche einen negativen Hinweis auf die Schaltabsicht gibt. Hat der Fahrer die Schalthand beispielsweise zu einer Faust geballt oder aber flach gestreckt, so kann davon ausgegangen werden, dass keine Schaltabsicht vorliegt.

Insbesondere ist es vorgesehen, dass das Vorliegen einer Schaltabsicht fahrerindividuell trainiert wird und so die für jeden Fahrer individuell typische Formung der Schalthand beim Schalten für das Erkennen der Schaltabsicht berücksichtigt wird.

Weiterhin vorzugsweise ist es vorgesehen, dass die Schaltabsicht abhängig von einer Formung, insbesondere einer greifenden vorbereitenden Formung, von zumindest einem Finger der Schalthand erkannt wird. Ist also ein Finger der Schalthand derart geformt, dass der Schaltknauf bzw. der Handschalthebel damit gegriffen oder betätigt werden kann, so ist dies ein Hinweis auf das Vorliegen der Schaltabsicht. Die Schaltabsicht kann auch abhängig von der Formung von mehreren Fingern der Schalthand erkannt werden. So kann den Fingern beispielsweise auch eine Gewichtung zugewiesen werden, je nachdem welche Rolle der jeweilige Finger beim Anpacken des Handschalthebels einnimmt. So ist der Daumen beispielsweise in diesem Zusammenhang wichtiger als der kleine Finger.

Weiterhin ist es vorzugsweise vorgesehen, dass die Schaltabsicht abhängig von einer Drehstellung eines Handgelenks der Schalthand erkannt wird. Durch die Drehstellung des Handgelenks kann abgeleitet werden, ob der Handschalthebel gegriffen werden kann und vorzugsweise wie der Handschalthebel gegriffen werden kann. Ist die Drehstellung des Handgelenks beispielsweise derart ausgebildet, dass ein Handrücken der Schalthand entgegen der Fahrzeughochachse zum Boden des Kraftfahrzeugs gerichtet ist und folglich eine Handinnenseite der Schalthand in Richtung eines Fahrzeugdachs des Kraftfahrzeugs gerichtet ist, so ist davon auszugehen, dass keine Schaltabsicht vorliegt, denn der Handschalthebel kann so nicht richtig gegriffen werden. Ist die Drehstellung des Handgelenks aber beispielsweise so wie wenn der Fahrer einen gefüllten Wasserbecher halten würde, so kann davon ausgegangen werden, dass die Schaltabsicht vorliegt.

Weiterhin ist es vorzugsweise vorgesehen, dass die Schaltabsicht abhängig von einer Entfernung der Schalthand zu einem Handschalthebel des Kraftfahrzeugs erkannt wird. Ist die Schalthand beispielsweise näher an dem Handschalthebel, so steigt die Wahrscheinlichkeit, dass die Schaltabsicht vorliegt. Es gilt je kürzer die Entfernung desto höher ist die Schaltabsicht. Die Wahrscheinlichkeit der Schaltabsicht kann beispielsweise quadratisch zur kürzer werdenden Entfernung zunehmen.

Weiterhin vorzugsweise ist es vorgesehen, dass die Schaltabsicht abhängig von einer Richtung einer Annäherung der Schalthand an einen Handschalthebel des Kraftfahrzeugs erkannt wird. Bewegt sich die Schalthand beispielsweise in einer Ebene welche senkrecht zur Fahrzeughochachse vorliegt, so steigt die Wahrscheinlichkeit, dass die Schaltabsicht vorliegt. Nähert sich die Schalthand zudem noch mit der Richtung parallel zu der Vorwärtsfahrrichtung oder zur Rückwärtsfahrrichtung, so steigt die Wahrscheinlichkeit der Schaltabsicht weiter. Nähert sich die Schalthand hingegeben von oben also entgegengesetzt der Fahrzeughochachse dem Handschalthebel an oder aber von links oder rechts, d. h. senkrecht zur Fahrzeuglängsachse und senkrecht zur Fahrzeughochachse, so sinkt die Wahrscheinlichkeit für das Vorliegen der Schaltabsicht.

Weiterhin ist es vorzugsweise vorgesehen, dass eine Hochschaltabsicht des Fahrers oder eine Runterschaltabsicht des Fahrers als die Schaltabsicht erkannt wird. So kann beispielsweise erkannt werden, ob der Fahrer vorhat einen Gang höher zu schalten, d. h. eine Hochschaltabsicht verfolgt oder aber vorhat einen Gang herunterzuschalten, d. h. eine Runterschaltabsicht verfolgt. Erkannt werden kann die Hochschaltabsicht oder die Runterschaltabsicht dadurch, dass erkannt wird, von welcher Richtung sich die Schalthand des Fahrers dem Handschalthebel annähert. So wird der Fahrer seine Schalthand wahrscheinlich beim Annähern an den Handschalthebel schon so bewegen, dass die darauffolgende Handschalthebelführung berücksichtigt ist. Will der Fahrer also den Handschalthebel von sich aus gesehen nach rechts vorne drücken und damit hochschalten, so wird er sich dem Gangschalthebel anders annähern als wenn er beispielsweise den Gangschalthebel nach links vorne drücken möchte und damit ein Runterschalten in einen niedrigeren Gang beabsichtigt.

Weiterhin ist es vorzugsweise vorgesehen, dass ein zu übertragendes Drehmoment einer Traktionseinheit des Kraftfahrzeugs bestimmt wird und die Kupplung nur so weit geöffnet wird, dass das bestimmte Drehmoment noch durch die Kupplung übertragen wird. So kann die Kupplung beispielsweise dadurch nur ansatzweise vorgeöffnet, aber nicht komplett geöffnet werden. Durch das ansatzweise Voröffnen kann die Kupplung dann zu einem späteren Zeitpunkt schneller komplett geöffnet werden. Das Voröffnen erfolgt beispielsweise nach dem Prinzip einer Fuzzylogik. Das Kraftfahrzeug wird gemäß dieser Ausführungsform quasi mit schleifender Kupplung betrieben, bis ein Zuverlässigkeitswert des Vergleichs groß genug ist, um die Kupplung vollständig zu öffnen.

Weiterhin ist es vorgesehen, dass die Kupplung durch einen, insbesondere elektrischen und/oder hydraulischen Aktor geöffnet wird. Der Aktor kann dabei als hydraulischer Aktor vorliegen, welcher in die Druckleitung zwischen Kupplungspedal und Kupplung eingebaut ist. Das Kraftfahrzeug kann aber auch kupplungspedallos ausgebildet sein und der Aktor kann dann beispielsweise als Elektromotor mit einem Spindelantrieb vorliegen. Es kann aber auch eine automatische Kupplung mit einem hydraulischen Wandler vorliegen.

Die Erfindung betrifft auch ein Kraftfahrzeug mit einem Handschaltgetriebe und einer automatischen Kupplung, wobei das Kraftfahrzeug dazu ausgebildet ist ein erfindungsgemäßes Verfahren auszuführen.

Insbesondere weist das Kraftfahrzeug zumindest eine Kamera auf. Die Kamera ist vorzugsweise im Innenraum des Kraftfahrzeugs, beispielsweise an einem Innenspiegelhalteelement angeordnet und auf den Fahrer gerichtet.

Insbesondere ist es vorgesehen, dass ein Handschalthebel des Handschaltgetriebes an einer Mittelkonsole des Kraftfahrzeugs angeordnet ist. Die Mittelkonsole erstreckt sich insbesondere in Fahrzeuglängsrichtung und liegt zumindest teilweise zwischen einem Fahrersitz und einem Beifahrersitz des Kraftfahrzeugs. Ist das Kraftfahrzeug linksgesteuert greift der Fahrer den Gangschalthebel mit der rechten Hand als Schalthand und ist das Kraftfahrzeug rechtsgesteuert so greift der Fahrer den Gangschalthebel mit der linken Hand als Schalthand. Vorteilhaft an der Anordnung des Gangschalthebels an der Mittelkonsole ist, dass dort die Schalthand des Fahrers mit der Kamera verdeckungsfrei erfasst werden kann. Vorzugsweise ist der Handschalthebel nicht am Lenkrad bzw. der Lenksäule des Kraftfahrzeugs angeordnet.

Vorteilhafte Ausführungen des erfindungsgemäßen Verfahrens sind als vorteilhafte Ausführungen des Kraftfahrzeugs anzusehen. Die gegenständlichen Komponenten des Kraftfahrzeugs sind dazu ausgebildet, die jeweiligen Verfahrensschritte durchzuführen.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ausführungsbeispiele der Erfindung werden nachfolgend anhand schematischer Zeichnungen näher erläutert.

Es zeigen:
- Figur 1: eine schematische Draufsichtdarstellung eines Ausführungsbeispiels eines erfindungsgemäßen Kraftfahrzeugs mit einem Handschaltgetriebe und einer automatischen Kupplung;
- Figur 2: eine schematische Darstellung eines weiteren Ausführungsbeispiels des Kraftfahrzeugs in seitlicher Schnittansicht, mit dem Handschaltgetriebe, der automatischen Kupplung, einem Handschalthebel und einer Kamera;
- Figur 3: eine schematische Seitendarstellung des Handschalthebels, der Kamera und einer Schalthand eines Fahrers des Kraftfahrzeugs; und
- Figur 4: eine schematische Draufsichtdarstellung des Handschalthebels und der Schalthand.

In den Figuren werden gleiche oder funktionsgleiche Elemente mit dem gleichen Bezugszeichen versehen.

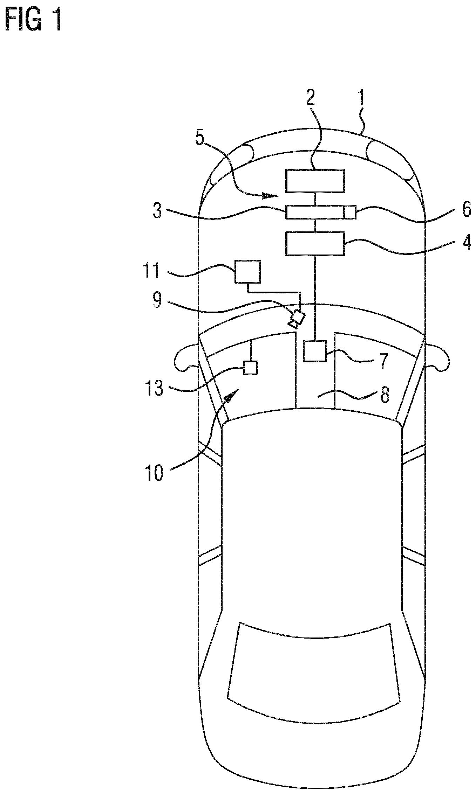

In Figur 1 ist eine schematische Draufsichtdarstellung eines Kraftfahrzeugs 1 gezeigt. Das Kraftfahrzeug 1 ist vorzugsweise als Personenkraftwagen ausgebildet, kann aber beispielsweise auch als Lastkraftwagen ausgebildet sein.

Gemäß dem Ausführungsbeispiel weist das Kraftfahrzeug 1 eine Traktionseinheit 2, eine automatische Kupplung 3 und ein Handschaltgetriebe 4 auf. Die Traktionseinheit 2 ist für den Antrieb des Kraftfahrzeugs 1 ausgebildet und kann beispielsweise als Verbrennungsmotor und/oder Elektromotor ausgebildet sein. Weiterhin kann das Kraftfahrzeug 1 beispielsweise auch als Hybridfahrzeug ausgebildet sein, so dass das Kraftfahrzeug 1 mehrere Traktionseinheiten 2 aufweist, beispielsweise einen Verbrennungsmotor und einen Elektromotor. Zwischen dem Verbrennungsmotor und dem Elektromotor kann eine, beispielsweise manuelle oder automatische, Kupplung angeordnet sein.

Es kann beispielsweise sein, dass der Verbrennungsmotor an einer Vorderachse des Kraftfahrzeugs 1 angeordnet ist währende der Elektromotor an einer Hinterachse des Kraftfahrzeugs 1 angeordnet ist oder umgekehrt.

Zwischen der Traktionseinheit 2 und dem Handschaltgetriebe 4 tritt bei geschlossener Kupplung 3 ein Kraftfluss 5 auf. Durch Öffnen der Kupplung 3 wird der Kraftfluss 5 zwischen der Traktionseinheit 2 und dem Handschaltgetriebe 4 unterbrochen. Während der Unterbrechung des Kraftflusses 5 kann das Handschaltgetriebe 4 manuell geschalten werden, es kann also manuell ein anderer Gang eingelegt werden.

Die Kupplung 3 ist als automatisierte Kupplung ausgebildet und weist gemäß dem Ausführungsbeispiel einen Aktor 6 auf. Durch den Aktor 6 kann die Kupplung 3 geöffnet und geschlossen werden. Der Aktor 6 kann elektrisch und/oder hydraulisch ausgebildet sein.

Das Handschaltgetriebe 4 ist als manuelles Fahrzeuggetriebe ausgebildet und wird durch einen Handschalthebel 7 geschalten. Insbesondere wird das Handschaltgetriebe 4 ausschließlich durch den Handschalthebel 7 geschalten.

Der Handschalthebel 7 ist gemäß dem Ausführungsbeispiel an einer Mittelkonsole 8 des Kraftfahrzeugs 1 angeordnet. Die Anordnung des Handschalthebels 7 ist aber in vielfältiger Weise möglich, jedoch vorzugsweise derart, dass der Handschalthebel 7 von einer Kamera 9 des Kraftfahrzeugs 1 erfasst werden kann.

Die Kamera 9 ist im Ausführungsbeispiel in einem Innenraum 10 des Kraftfahrzeugs 1 angeordnet, beispielsweise an einem Cockpit des Kraftfahrzeugs 1 oder an einem Innenspiegelsockel des Kraftfahrzeugs 1. Die Kamera 9 ist mit einer Auswerteeinheit 11 des Kraftfahrzeugs 1 verbunden. Die Auswerteeinheit 11 kann beispielsweise in die Kamera 9 integriert sein oder aber separat dazu ausgebildet sein und an vielfältigen Orten im Kraftfahrzeug 1 angeordnet sein. Die Auswerteeinheit 11 ist dazu ausgebildet, ein Bild 12, welches mit der Kamera 9 aufgenommen wird, auszuwerten. Die Kamera 9 kann beispielsweise als CCD-Kamera (CCD - charge coupled device) oder als CMOS-Kamera (CMOS - complementary metall-oxid-semiconductor) ausgebildet sein. Gemäß dem Ausführungsbeispiel weist das Kraftfahrzeug 1 auch ein Kupplungspedal 13 auf. Das Kupplungspedal 13 kann mit der Kupplung 3 verbunden sein oder aber lediglich als Attrappe im Fußraum des Kraftfahrzeugs 1 angeordnet sein. Das Kupplungspedal 13 kann beispielsweise auch nur als Signalgeber für die automatische Kupplung 3 vorhanden sein.

Für den Fall, dass das Kraftfahrzeug 1 mehrere Traktionseinheiten 2 aufweist, können auch mehrere Kupplungen 3 vorhanden sein. So kann beispielsweise für jede Traktionseinheit 2 auch eine dieser Traktionseinheit 2 zugeordnete Kupplung 3 vorhanden sein.

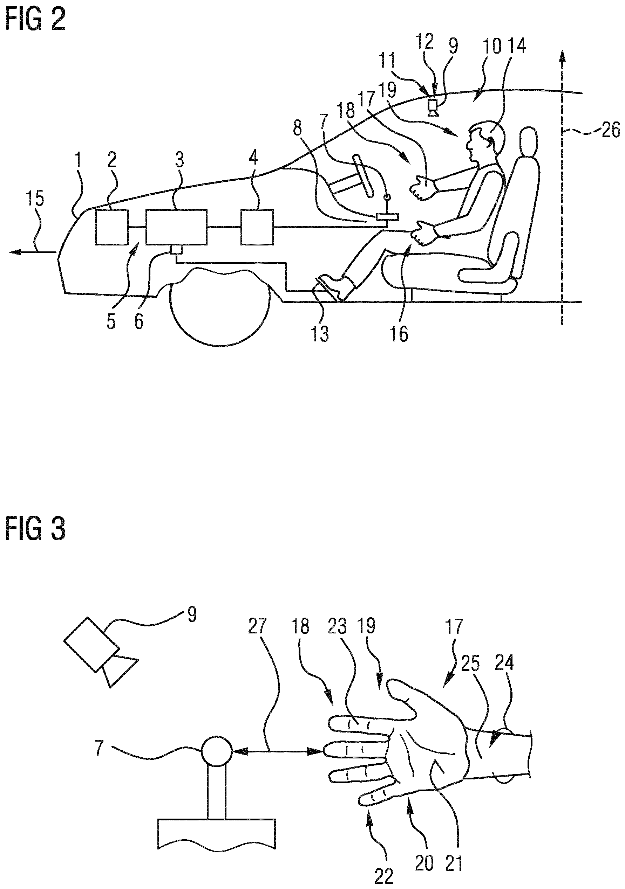

Figur 2 zeigt das Kraftfahrzeug 1 in schematischer Seitenansichtdarstellung. Das Kraftfahrzeug 1 gemäß dem Ausführungsbeispiel ist linksgesteuert, wonach ein Fahrer 14 des Kraftfahrzeugs 1 in eine Fahrtrichtung 15 des Kraftfahrzeugs 1 gesehen links von der Mittelkonsole 8 sitzt. Das Kraftfahrzeug 1 kann aber auch als rechtsgesteuertes Kraftfahrzeug ausgebildet sein, wonach der Fahrer 14 dann rechts von der Mittelkonsole 8 sitzen würde.

Ein Ausführungsbeispiel eines Verfahrens läuft dann beispielsweise so ab, dass eine Hand 16 des Fahrers 14 als Schalthand 17 bestimmt wird. Der Fahrer 14 kann beispielsweise zwei Hände 16 aufweisen, wovon eine als die Schalthand 17 bestimmt wird. Das Bestimmen der Schalthand 17 kann beispielsweise danach erfolgen, ob das Kraftfahrzeug 1 rechtsgesteuert ist oder ob das Kraftfahrzeug 1 linksgesteuert ist.

Ist das Kraftfahrzeug 1 beispielsweise linksgesteuert, so ist insbesondere die rechte Hand des Fahrers 14 auch die Schalthand 17. Ist das Kraftfahrzeug 1 beispielsweise rechtsgesteuert, so ist vorzugsweise die linke Hand des Fahrers 14 auch die Schalthand 17. Die Schalthand 17 kann aber auch wechseln.

Mit der Kamera 9 wird das Bild 12 von der Schalthand 17 aufgenommen. Es können aber beispielsweise auch mehrere Kameras 9 in dem Kraftfahrzeug 1 angeordnet sein und es können beispielsweise auch mehrere Bilder 12 von der Schalthand 17 aufgenommen werden. So können die Bilder 12 beispielsweise gleichzeitig oder zeitversetzt von der Schalthand 17 aufgenommen werden. Insbesondere wird von der Schalthand 17 eine Bildsequenz mit mehreren Bildern 12 aufgenommen. Anhand dieser Bildsequenz kann ein Bewegungsverlauf der Schalthand 17 erfasst werden und durch die Auswerteeinheit 11 ausgewertet werden.

In dem Bild 12 wird von der Schalthand 17 zumindest ein charakteristisches Merkmal 18 bestimmt. Das charakteristische Merkmal 18 kann in vielfältiger Weise vorliegen. Es kann beispielsweise ein komplexes Merkmal aus der Bildverarbeitung und der Mustererkennung sein, wie beispielsweise ein SIFT-Merkmal (SIFT - Scale-invariant feature transform) oder aber lediglich, zumindest teilweise eine Kontur der Schalthand 17 oder zumindest ein Teil des Bildes 12. So kann beispielsweise lediglich das Bild 12 oder aber die Bildsequenz als das Merkmal 18 vorliegen. Vorzugsweise werden aber mehrere Merkmale 18 von der Schalthand 17 bestimmt und dies auch vorzugsweise von jedem Bild 12 der Bildsequenz.

Das Merkmal 18 wird mit zumindest einem Referenzmerkmal verglichen. Insbesondere wird das Merkmal 18 mit einer Vielzahl von Referenzmerkmalen verglichen. Die Referenzmerkmale sind vorzugsweise Merkmale, welche charakteristisch für das Vorliegen einer Schaltabsicht 19 des Fahrers 14 sind. So können die Referenzmerkmale beispielsweise derart erzeugt werden, dass ein Trainingsfahrer während seiner Fahrt beobachtet wird und von einer Schalthand des Trainingsfahrers fortlaufend Bilder aufgenommen werden, in welchen Merkmale bestimmt werden und die Bilder dann in eine Klasse "Schalten" und in eine Klasse "Nicht-Schalten" eingeordnet werden. Referenzmerkmale, welche in die Klasse "Schalten" fallen, also auf Bildern vorhanden sind, die den Trainingsfahrer beim Schalten zeigen, werden dazu benutzt, dass diese bei ausreichender Ähnlichkeit mit dem Merkmal 18 dazu führen, dass die Schaltabsicht 19 erkannt wird. Referenzmerkmale hingegen, welche in Bildern des Trainingsfahrers vorliegen, in welchen der Trainingsfahrer nicht geschalten hat, können dazu genutzt werden, um bei ausreichender Ähnlichkeit mit dem Merkmal 18 dazu zu führen, dass das Vorliegen der Schaltabsicht 19 verneint wird und die Schaltabsicht 19 nicht erkannt wird.

Bei Vorliegen der Schaltabsicht 19 wird davon ausgegangen, dass der Fahrer 14 demnächst, insbesondere innerhalb von wenigen Sekunden, also beispielsweise weniger als 2 Sekunden den Handschalthebel 7 ergreift und einen anderen Gang des Handschaltgetriebes 4 einlegt.

Falls die Schaltabsicht 19 erkannt wird, wird die Kupplung 3 durch den Aktor 6 geöffnet und der Kraftfluss 5 zwischen der Traktionseinheit 2 und dem Handschaltgetriebe 4 wird unterbrochen. Nun kann der Fahrer 14 den Gang des Handschaltgetriebes 4 wechseln ohne wie üblich das Kupplungspedal 13 betätigen zu müssen.

Nach erfolgtem Schaltvorgang wird insbesondere erkannt, dass der Schaltvorgang abgeschlossen ist und die Kupplung 3 wird vorzugsweise geschlossen. Dadurch wird die Unterbrechung des Kraftflusses 5 aufgehoben und die Traktionseinheit 2 kann seine Kraft wieder an das Handschaltgetriebe 4 abgeben.

Figur 3 zeigt eine Detaildarstellung des Handschalthebels 7 und der Schalthand 17, welche durch die Kamera 9 erfasst werden. Gemäß dem Ausführungsbeispiel wird die Schaltabsicht 19 abhängig von einer Formung 20 der Schalthand 17 erkannt. Falls die Schalthand 17 also derart geformt ist, dass mit der Schalthand 17 ein Greifen beabsichtigt ist, bzw. kurz bevorsteht, so wird von dem Vorliegen der Schaltabsicht 19 ausgegangen. Die Formung 20 der Schalthand 17 kann beispielsweise derart vorliegen, dass eine Handinnenfläche 21 der Schalthand 17 nach innen gekrümmt ist.

Weiterhin wird gemäß dem Ausführungsbeispiel die Schaltabsicht 19 erkannt, falls eine Formung 22 von zumindest einem Finger 23 der Schalthand erkannt wird. Die Formung 22 des Fingers 23 weist beispielsweise dann auf die Schaltabsicht 19 hin, falls der Finger 23 gekrümmt ist, insbesondere wenn mehrere Finger 23 gekrümmt sind, besonders insbesondere wenn der Zeigefinger und der Daumen der Schalthand 17 derart gekrümmt sind, dass damit ein Greifen vorbereitet wird.

Weiterhin wird die Schaltabsicht 19 erkannt, falls eine Drehstellung 24 eines Handgelenks 25 der Schalthand 17 vorliegt, welche daraufhin deutet, dass demnächst ein im Wesentlichen in Richtung einer Fahrzeughochachse 26 ragender stabförmiger Gegenstand gegriffen werden kann. Insbesondere ist das der Fall, wenn die beiden Knöchel des Handgelenks 25 gemeinsam von der Fahrzeughochachse 26 geschnitten werden.

Die Schaltabsicht 19 wird auch abhängig davon erkannt, welche Entfernung 27 zwischen der Schalthand 17 und dem Handschalthebel 7 vorliegt. Die Entfernung 27 kann beispielsweise durch eine Wahrscheinlichkeitsfunktion in das Erkennen der Schaltabsicht 19 mit einfließen. Je kürzer die Entfernung 27 zwischen der Schalthand 17 und dem Handschalthebel ist, desto wahrscheinlicher liegt die Schaltabsicht 19 vor. Die Entfernung 27 kann beispielsweise als die kürzeste Verbindung zwischen dem Handschalthebel 7 und der Schalthand 17 vorliegen.

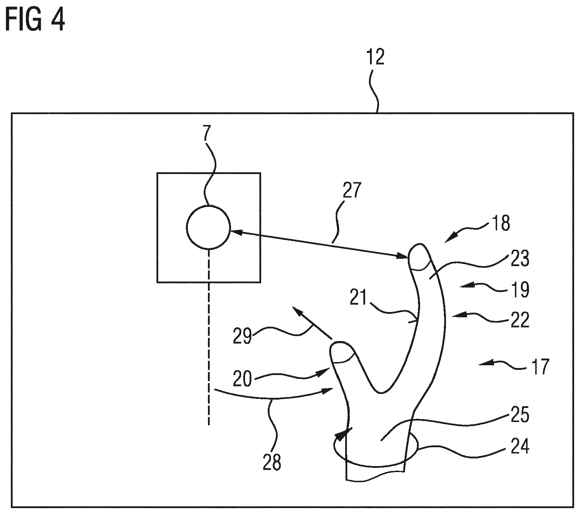

Figur 4 zeigt das Bild 12 mit dem in Draufsicht abgebildeten Handschalthebel 7 und der Schalthand 17. Das Bild 12 kann beispielsweise als Farbbild oder lediglich als Intensitätswertbild vorliegen, falls das Bild 12 mit einem optischen Sensor, wie beispielsweise einem Laserscanner oder einer Infrarotbildkamera aufgenommen wird. Die Schalthand 17 zeigt die Formung 20, welche auf ein bevorstehendes Greifen hinweist. So ist der Daumen der Schalthand 17 von den restlichen Fingern der Schalthand 17 beispielsweise derart beabstandet, dass ein Greifen eines Gegenstandes, welcher die Abmessungen Handschalthebels 7 aufweist, möglich ist.

Die Schaltabsicht 19 kann aber auch ergänzend oder alternativ abhängig von einer Richtung 28 einer Annäherung 29 der Schalthand 17 erkannt werden. Nähert sich die Schalthand 17 beispielsweise - von der Sicht des im Fahrersitzes sitzenden Fahrers 14 aus gesehen - von vorne dem Handschalthebel 7 an, so ist das Vorliegen der Schaltabsicht 19 wahrscheinlicher, als wenn sich die Schalthand 17 dem Handschalthebel 7 von hinten annähert, denn dann ist eher davon auszugehen, dass der Fahrer 14 ein Bedienelement des Kraftfahrzeugs 1 an der Mittelkonsole 8 bedient hat, beispielsweise ein Radiogerät, und die Schalthand 17 zurückzieht, um diese beispielsweise auf eine Armlehne zurückzulegen.

Anhand der Richtung 28 kann beispielsweise auch erkannt werden, ob eine Hochschaltabsicht oder eine Runterschaltabsicht vorliegt. Falls ein Hochschalten bevorsteht, wird der Handschalthebel 7 in eine andere Richtung bewegt, als wenn ein Runterschalten bevorsteht. Diese zukünftige Bewegung kann auch aus der Richtung 28 der Annäherung 29 abgeleitet werden, bzw. prognostiziert werden.

### Bezugszeichenliste

- 1: Kraftfahrzeug
- 2: Traktionsmotor
- 3: Kupplung
- 4: Handschaltgetriebe
- 5: Kraftfluss
- 6: Aktor
- 7: Handschalthebel
- 8: Mittelkonsole
- 9: Kamera
- 10: Innenraum
- 11: Auswerteeinheit
- 12: Bild
- 13: Kupplungspedal
- 14: Fahrer
- 15: Fahrtrichtung
- 16: Hand
- 17: Schalthand
- 18: charakteristisches Merkmal
- 19: Schaltabsicht
- 20: Formung der Schalthand
- 21: Handinnenfläche
- 22: Formung des Fingers
- 23: Finger
- 24: Drehstellung
- 25: Handgelenk
- 26: Fahrzeughochachse
- 27: Entfernung
- 28: Richtung
- 29: Annäherung

## Patentansprüche

1. Verfahren zum Betreiben eines mit einem Handschaltgetriebe (4) und einer automatischen Kupplung (3) ausgebildeten Kraftfahrzeugs (1), bei welchem folgende Schritte durchgeführt werden:
- Aufnehmen zumindest eines Bilds (12) einer Schalthand (17) eines Fahrers (14) des Kraftfahrzeugs (1);
- Bestimmen zumindest eines charakteristischen Merkmals (18) der abgebildeten Schalthand (17) im Bild (12);
- Vergleichen des Merkmals (18) mit zumindest einem Referenzmerkmal;
- Erkennen einer Schaltabsicht (19) des Fahrers (14) anhand des Vergleichs; und
- Zumindest teilweises Öffnen der Kupplung (3), falls die Schaltabsicht (19) erkannt wird.

2. Verfahren nach Anspruch 1,
**dadurch gekennzeichnet, dass**
die Schaltabsicht (19) abhängig von einer Formung (20) der Schalthand (17) erkannt wird.

3. Verfahren nach Anspruch 1 oder 2,
**dadurch gekennzeichnet, dass**
die Schaltabsicht (19) abhängig von einer Formung (22) von zumindest einem Finger (23) der Schalthand (17) erkannt wird.

4. Verfahren nach einem der vorhergehenden Ansprüche,
**dadurch gekennzeichnet, dass**
die Schaltabsicht (19) abhängig von einer Drehstellung (24) eines Handgelenks (25) der Schalthand (17) erkannt wird.

5. Verfahren nach einem der vorhergehenden Ansprüche,
**dadurch gekennzeichnet, dass**
die Schaltabsicht (19) abhängig von einer Entfernung (27) der Schalthand (17) zu einem Handschalthebel (7) des Kraftfahrzeugs (1) erkannt wird.

6. Verfahren nach einem der vorhergehenden Ansprüche,
**dadurch gekennzeichnet, dass**
die Schaltabsicht (19) abhängig von einer Richtung einer Annäherung der Schalthand (17) an einen Handschalthebel (7) des Kraftfahrzeugs (1) erkannt wird.

7. Verfahren nach einem der vorhergehenden Ansprüche,
**dadurch gekennzeichnet, dass**
eine Hochschaltabsicht des Fahrers (14) oder eine Runterschaltabsicht des Fahrers (14) als die Schaltabsicht (19) erkannt wird.

8. Verfahren nach einem der vorhergehenden Ansprüche,
**dadurch gekennzeichnet, dass**
ein zu übertragendes Drehmoment einer Traktionseinheit (2) des Kraftfahrzeugs (1) bestimmt wird und die Kupplung (3) nur so weit geöffnet wird, dass das Drehmoment noch durch die Kupplung (3) übertragen wird.

9. Kraftfahrzeug (1) mit einem Handschaltgetriebe (4) und einer automatischen Kupplung (3), welches dazu ausgebildet ist ein Verfahren gemäß einem der vorhergehenden Ansprüche durchzuführen.

10. Kraftfahrzeug (1) nach Anspruch 9,
**dadurch gekennzeichnet, dass**
ein Handschalthebel (7) des Handschaltgetriebes (4) an einer Mittelkonsole (8) des Kraftfahrzeugs (1) angeordnet ist.
